# EUROPÄISCHE PATENTANMELDUNG

(11) **EP 0 599 406 A1**
(43) Veröffentlichungstag der Anmeldung: **01.06.1994**
(21) Anmeldenummer: 93203228.7
(22) Anmeldetag: 18.11.1993
(51) Int. Cl.: B29C 45/17

(54) **Spritzgiess- oder Spritzprägemaschine**

(30) Priorität: 26.11.1992 DE 4239775
(71) Anmelder: POLYGRAM MANUFACTURING & DISTRIBUTION CENTRES GMBH, D-30851 Langenhagen (DE); Polygram International Holding B.V., NL-3743 DN Baarn (NL)
(72) Erfinder: Eggers, Gerhard, D-30918 Isernhagen (DE); Becker, Jürgen, D-30890 Barsinghausen (DE); Grobecker, Hermann, D-30827 Garbsen (DE); Ahrens, Harald, Dr., D-30657 Hannover (DE)
(74) Vertreter: Erdmann, Anton, Dipl.-Ing.

(57) **Zusammenfassung**

Die Erfindung bezieht sich auf eine Spritzgieß- oder Spritzprägemaschine zur Herstellung scheibenförmiger Informationsträger mit einer in Schließrichtung (21) beweglichen Formplatte (15') zur Halterung eines ersten Formkörpers (27), der mindestens eine Matrize (20) aufnimmt und über bewegliche Versorgungsleitungen (31) mit der Maschine verbunden ist. Um die Zeit zum Matrizenwechsel zu verkürzen, wird gemäß der Erfindung vorgeschlagen,
a) daß die Formplatte (15') eine quer zur Schließrichtung (21) verlaufende Horizontal-Gleitvorrichtung (38) für den Formkörper (27) aufweist,
b) daß neben der Maschine eine ortsfest angeordnete Wechselvorrichtung (30) angeordnet ist, die eine erste, senkrecht verschiebbare Horizontal-Gleitvorrichtung (36) zur Aufnahme des in der Maschine befindlichen Formkörpers (27) und mindestens eine weitere, senkrecht verschiebbare Horizontal-Gleitvorrichtung (37) für einen weiteren Formkörper (32) aufweist, der mindestens eine Matrize (20) aufnimmt und über eigene Versorgungsleitungen (33) mit der Maschine verbunden ist,
c) daß die Wechselvorrichtung (30) so angeordnet ist, daß beide Formkörper (27, 32) ohne Lösen der Versorgungsleitungen (31, 33) durch Verschieben ihre Plätze wechseln können.

## Beschreibung

Die Erfindung bezieht sich auf eine Spritzgieß- oder Spritzprägemaschine zur Herstellung scheibenförmiger Informationsträger, z.B. CD's, mit einer in Schließrichtung beweglichen Formplatte zur Halterung eines ersten Formkörpers, der mindestens eine Matrize aufnimmt und über bewegliche Versorgungsleitungen mit der Maschine verbunden ist. Die Erfindung bezieht sich ferner auf ein Verfahren zur Herstellung scheibenförmiger Informationsträger mittels eines Spritzgieß- oder Spritzprägeverfahrens auf einer Maschine der eingangs genannten Art.

Wenn bei derartigen Maschinen eine vorgegebene Anzahl gefertigter Informationsplatten erreicht ist, muß die Matrize gewechselt werden. Dazu wird bisher die Maschine gestoppt und außer Betrieb gesetzt. Sodann wird die alte Matrize ausgebaut, die neue Matrize und die als Auflage dienende Formoberfläche werden intensiv gereinigt, und danach wird dann die neue Matrize montiert. Danach kann die Maschine wieder in Betrieb gesetzt werden. Dieser Vorgang nimmt aufgrund der beschriebenen, sorgfältig durchzuführenden Arbeiten eine relativ große Zeit in Anspruch, insbesondere bei solchen Maschinen, bei welchen die genannten Arbeiten direkt vor Ort, d.h. im engen Bereich der Maschine durchgeführt werden müssen.

Bei einer anderen Ausführung ist bereits vorgeschlagen worden, den Formkörper auf horizontal angeordneten Parallelschienen seitlich herauszufahren. Diese Bauweise hat den Vorteil, daß die Zugänglichkeit, insbesondere bei einer Bauart mit zwei nebeneinanderliegenden Matrizen, erheblich verbessert ist. Jedoch muß auch hier die Maschine immer noch für eine relativ große Zeit außer Betrieb gesetzt werden. Dazu kommt, daß hier zwei Matrizen gewechselt werden müssen.

Durch die EP-OS 0 092 685 ist eine Schnellwechsel- und/oder Schnellspannvorrichtung für Formwerkzeuge von Spritzgießmaschinen bekanntgeworden, wobei die beiden Formhälften zwischen zwei sich gegenüberliegenden Formaufspannplatten in Einschubführungen ausrichtbar und in ihrer Ausrichtlage über Klemmorgane festspannbar sind. Dabei ist vorgesehen, daß die Einschubführungen an den Formaufspannplatten der Spritzgießmaschine im wesentlichen horizontal und normal zur Verstellrichtung des Formwerkzeuges verlaufen, daß der Spritzgießmaschine ein mittels Führungsorganen längs einer ortsfesten Leitschiene quer zu den Einschubführungen bewegbarer Transportwagen für Spritzwerkzeuge zugeordnet ist und daß der Transportwagen mindestens einen sich in Richtung der Einschubführungen erstreckenden Quertransport trägt, mit welchem die Spritzwerkzeuge in die und aus den Einschubführungen fahrbar sind.

Der Erfindung liegt die Aufgabe zugrunde, die Stillstandszeiten der Maschine beim Wechsel der Matrizen zu verkürzen.

Diese Aufgabe wird bei einer eingangs genannten Spritzgieß- oder Spritzprägemaschine gemäß der Erfindung dadurch gelöst,
a) daß die Formplatte eine quer zur Schließrichtung verlaufende Horizontal- Gleitvorrichtung für den ersten Formkörper aufweist,
b) daß neben der Maschine eine ortsfest gelagerte Wechselvorrichtung angeordnet ist, die eine erste, senkrecht verschiebbare Horizontal-Gleitvorrichtung zur Aufnahme des in der Maschine befindlichen Formkörpers und mindestens eine weitere, senkrecht verschiebbare Horizontal-Gleitvorrichtung für einen weiteren Formkörper aufweist, der mindestens eine Matrize aufnimmt und über eigene Versorgungsleitungen mit der Maschine verbunden ist, und
c) daß die Wechselvorrichtung so angeordnet ist, daß beide Formkörper ohne Lösung der Versorgungsleitungen durch Verschieben ihre Plätze wechseln können.

Bei einer derartigen Bauweise ist der erste Formkörper innerhalb der Maschine angeordnet, so daß die Maschine Informationsträger produzieren kann, während gleichzeitig der zweite Formkörper auf der Wechselvorrichtung geparkt ist und von der Bedienungsperson mit der oder den für den Folgeauftrag nötigen Matrizen versehen wird. Nachdem eine gewünschte Anzahl Platten geprägt bzw. gespritzt ist, wird die Maschine kurzzeitig gestoppt und der Formkörper mit den bisher benutzten Matrizen wird einfach in die Parkposition der Wechselvorrichtung geschoben, während danach der Formkörper mit den vorbereiteten neuen Matrizen in umgekehrter Richtung von der Wechselvorrichtung in die Horizontal-Gleitvorrichtung der Maschine geschoben wird. Für diesen Vorgang ist nur ein Bruchteil der bisher üblichen Zeit erforderlich, so daß die Maschine nicht außer Betrieb gesetzt zu werden braucht. Da beide Formkörper jeweils für sich mit den nötigen Versorgungsleitungen versehen sind, die auch während der Wechsel- und Parkphase angeschlossen bleiben, entfällt der gesamte Aufwand für sonst bei getrennten Systemen übliche Entkopplungs- und Kopplungsarbeiten. Ferner bietet diese Bauweise einen besonderen Vorteil im Hinblick auf die gerade für die CD-Fertigung nötige Temperaturstabilität der die Matrizen aufnehmenden Formkörper bzw. Formteile.

Die Betätigung der Wechselvorrichtung kann entweder durch Handbetrieb oder automatisch, z.B. pneumatisch, elektrisch oder hydraulisch, erfolgen.

In weiterer Ausgestaltung der Erfindung ist vorgesehen, daß die Horizontal-Gleitvorrichtungen mit paarweise verlaufenden Horizontal-Gleitschienen und die Formkörper mit entsprechend angeordneten Gleitstücken versehen sind. Derartig ausgebildete Gleitvorrichtungen erfordern einen geringen Materialaufwand und gewährleisten ein schnelles und zuverlässiges Wechseln der Formkörper.

In weiterer Ausgestaltung der Erfindung sind die Horizontal-Gleitschienen der Wechselvorrichtung durch eine Gleitplatte miteinander gekoppelt, wobei die Gleitplatte senkrecht verschiebbar auf einem mit Gleitschienen versehenen Rahmen der Wechselvorrichtung angeordnet ist.

Es ist auch möglich, jeweils nur die beiden Horizontal-Gleitschienen einer Horizontal-Gleitvorrichtung z.B. durch Streben miteinander zu verbinden. Dann kann jede Horizontal-Gleitvorrichtung der Wechselvorrichtung für sich verschoben werden. Dabei kann der auf der Wechselvorrichtung befindliche vorbereitete Formkörper sowohl in einer Ebene oberhalb des in der Maschine befindlichen Formkörpers als auch in einer Ebene unterhalb dieses Formkörpers geparkt werden.

Ein Verfahren zur Herstellung scheibenförmiger Informationsträger mittels eines Spritzgieß- oder Spritzprägeverfahrens auf einer Maschine gemäß der Erfindung ist dadurch gekennzeichnet,
a) daß ein erster Formkörper mit mindestens einer Matrize bestückt, in die Maschine eingebracht und über Versorgungsleitungen mit der Maschine verbunden wird,
b) daß ein zweiter, identisch aufgebauter Formkörper in eine der Horizontal-Gleitvorrichtungen der Wechselvorrichtung eingebracht, mit mindestens einer Matrize versehen und über eigene Versorgungsleitungen an die Maschine angeschlossen wird und
c) daß zum Matrizenwechsel die Maschine kurzzeitig gestoppt und die erste Formplatte durch Verschieben gegen die zweite Formplatte ausgetauscht wird, ohne daß die jeweiligen Versorgungsleitungen gelöst werden.

Dieses Verfahren ermöglicht ein einfaches, schnelles und problemloses Wechseln der Matrizen. Dabei wird der in der Parkposition auf der Wechselvorrichtung befindliche Formkörper mit den darauf befestigten Matrizen zunächst über seine Versorgungsleitungen auf die erforderliche Betriebstemperatur gebracht. Der Wechsel der Formkörper mit den darauf befindlichen Matrizen erfolgt dann z.B. derart,
a) daß nach dem Stoppen der Maschine der erste Formkörper von der Formplatte in die leere Horizontal-Gleitvorrichtung der Wechselvorrichtung geschoben,
b) daß die Gleitplatte mit dem eingeschobenen ersten Formkörper und dem zweiten vorbereiteteen Formkörper nach oben geschoben wird, so daß der zweite Formkörper neben der Formplatte mit der Horizontal-Gleitvorrichtung zu liegen kommt, und
c) daß der zweite Formkörper durch Horizontalverschiebung in die Horizontal-Gleitvorrichtung der Formplatte eingebracht wird.

In der Zeichnung sind in den Fig. 1 bis 3 Ausführungsbeispiele des Gegenstandes gemäß der Erfindung schematisch dargestellt.
Fig. 1 zeigt eine perspektivische Darstellung einer Spritzgießmaschine,
Fig. 2 zeigt in einer Draufsicht eine weitere Spritzgießmaschine mit einer angebauten Wechselvorrichtung, und
Fig. 3 zeigt in einer perspektivischen Ansicht die Wechselvorrichtung gemäß Fig. 2 zusammen mit einer Formplatte der Spritzgießmaschine.

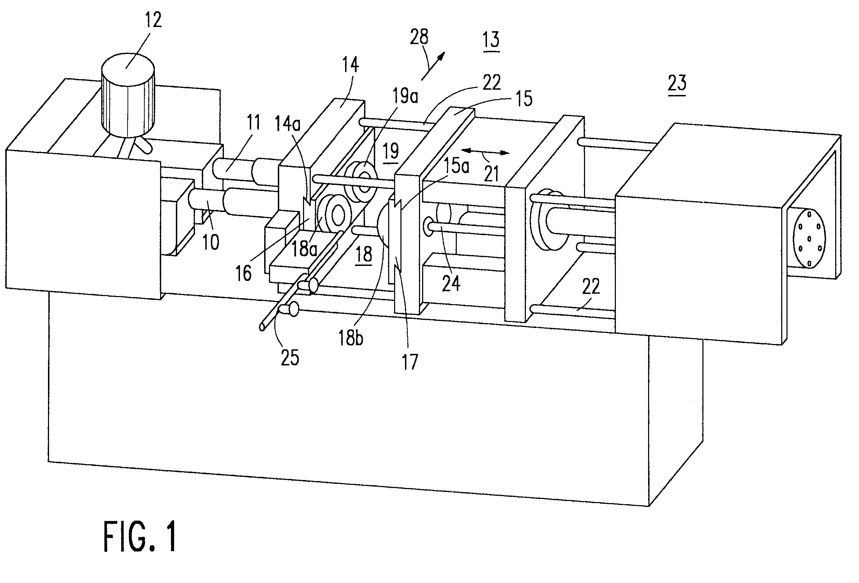

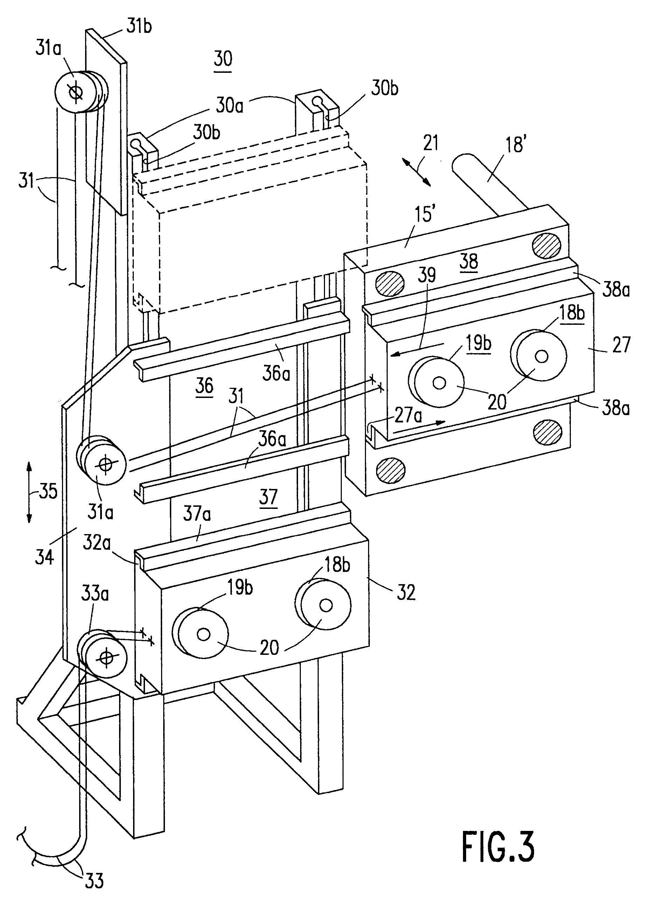

Die Maschine gemäß Fig. 1 besitzt zwei gesonderte Spritzaggregate 10, 11, die aus einem gemeinsamen Materialbehälter 12 gespeist werden. Mit 13 ist insgesamt eine Formeinrichtung bezeichnet, die eine feste Formplatte 14 und eine bewegliche Formplatte 15 aufweist. Die Formplatten 14, 15 besitzen schwalbenschwanzförmige Horizontal-Gleitvorrichtungen 14a, 15a zur Aufnahme von Formkörpern 16, 17. Der feste Formkörper 16 trägt zwei Formteile 18a, 19a, und der bewegliche Formkörper 17 trägt zwei Formteile 18b, 19b. Die aus den Formteilen 18a, b und 19a, b gebildeten Formen 18 und 19 liegen nebeneinander in einer horizontalen Ebene und sind identisch aufgebaut. Die beweglichen Formteile 18b, 19b dienen zur Aufnahme jeweils einer in Fig. 3 erkennbaren Matrize 20. Die bewegliche Formplatte 15 ist in Richtung 21 auf Stangen 22 verschiebbar angeordnet. Beim Preßvorgang wird die bewegliche Formplatte 15 über eine Schließeinheit 23 in Richtung auf die feste Formplatte 14 bewegt. Dabei wird in die durch die Formen 18, 19 gebildeten Hohlräume über die Spritzaggregate 10, 11 Material eingespritzt, aus welchem die scheibenförmigen Informationsträger geformt werden.

Mit 24 ist ein Antrieb für einen nicht dargestellten Platten- und Angußausstoßer und mit 25 eine Teile-Entnahmeeinrichtung bezeichnet.

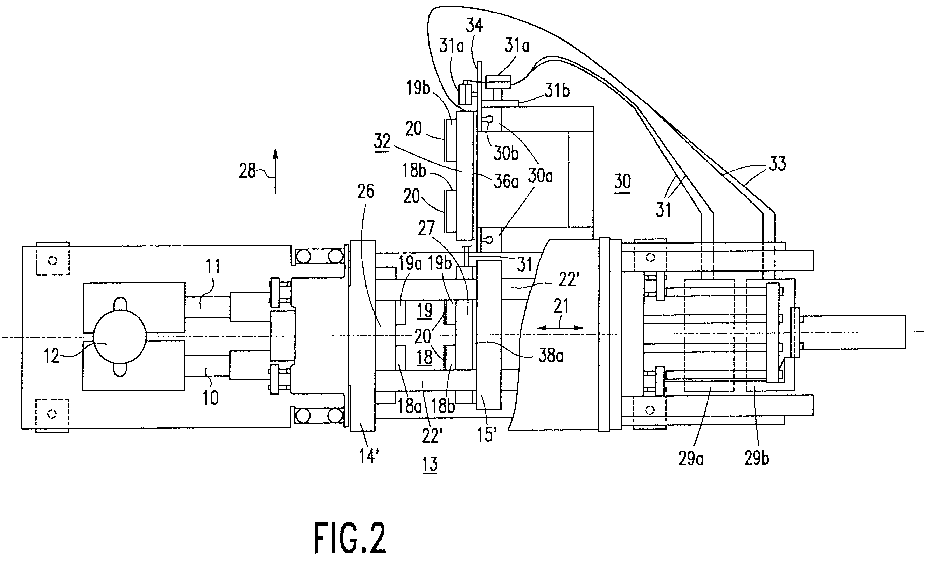

Fig. 2 zeigt eine Spritzgießmaschine, die ähnlich so aufgebaut ist wie die in Fig. 1 dargestellte Maschine. Beide Maschinen unterscheiden sich nur in Einzelheiten, dabei sind gleiche Teile mit gleichen Bezugszeichen versehen. Die Formplatten 14', 15' und die Gleitstangen 22' sind leicht abgewandelt ausgebildet. Die Formteile 18a, 19a sitzen auf einem Formkörper 26, und die Formteile 18b, 19b sitzen auf einem Formkörper 27. Die Formkörper 26, 27 sind, wie im Ausführungsbeispiel gemäß Fig. 1, in Richtung 28 quer zur Schließrichtung 21 herausziehbar angeordnet. Im Unterschied zu Fig. 1 sind dabei die Formkörper 26, 27 nicht über Schwalbenschwanzführungen, sondern über rechteckförmige Horizontal-Gleitvorrichtungen auf den Formplatten 14',15' gelagert, wie dies weiter unten bei Fig. 3 im Zusammenhang mit dem auf der beweglichen Formplatte 15' gelagerten Formkörper 27 erläutert wird. Mit 29a, b sind zwei Temperiergeräte bezeichnet. Neben der Spritzgießmaschine in Fig. 2 ist eine ortsfeste Wechselvorrichtung 30 angeordnet. Mit dieser Wechselvorrichtung kann der über Versorgungsleitungen 31 mit dem Temperiergerät 29a verbundene Formkörper 27 gegen einen anderen Formkörper 32 ausgetauscht werden, der gleitbar auf der Wechselvorrichtung 30 sitzt und über Versorgungsleitungen 33 mit dem Temperiergerät 29b verbunden ist.

Fig. 3 zeigt die ortsfest mit der Spritzgießmaschine verbundene Wechselvorrichtung 30 mit einem Rahmen 30a, der zwei Senkrechtschienen 30b enthält. Auf den Senkrechtschienen 30b ist eine Gleitplatte 34 in Richtung 35 verschiebbar angeordnet. Die Gleitplatte 34 trägt eine erste und eine zweite Horizontal-Gleitvorrichtung 36 und 37 mit jeweils zwei im Querschnitt winkelförmigen Horizontalschienen 36a und 37a. Die zweite Gleitvorrichtung 37 trägt den Formkörper 32, der genauso aufgebaut ist wie der in der Maschine befindliche Formkörper 27 und identisch aufgebaute Formteile 18b, 19b besitzt, auf denen Matrizen 20 befestigt sind. Der Formkörper 32 und damit die Formteile 18b, 19b sind über die beweglichen Versorgungssleitungen 33 mit dem Temperiergerät 29b verbunden. Die Versorgungsleitungen 31, 33 werden über Umlenkrollen 31a, 33a geführt. Eine der Umlenkrollen 31a sitzt auf einer Tragplatte 31b.

Neben der Wechselvorrichtung 30 in Fig. 3 ist die in der Spritzgießmaschine gemäß Fig. 2 befestigte Formplatte 15' erkennbar, die, wie oben beschrieben, auf Stangen 18' in Richtung 21 bewegbar in der Spritzgießmaschine angeordnet ist. Weitere Teile der Spritzgießmaschine sind in Fig. 3 nicht dargetellt. Die bewegliche Formplatte 15' trägt eine Horizontal-Gleitvorrichtung 38 mit zwei winkelförmigen Horizontalschienen 38a. Die auf der beweglichen Formplatte 15' und auf der Wechselvorrichtung 30 angeordneten Horizontalschienen 38a, 36a, 37a sind identisch aufgebaut, so daß die Formkörper 27 bzw. 32 problemlos zwischen der Wechselvorrichtung 30 und der beweglichen Formplatte 15' hin und her transportiert werden können.

Soll nun ein Wechsel der Formkörper bzw. der Matrizen stattfinden, so wird zunächst der Formkörper 32 mit seinen Formteilen 18b, 19b gereinigt und mit Matrizen 20 versehen. Sodann wird der nicht mehr benötigte Formkörper 27 in Richtung 39 auf die leeren Horizontal-Gleitschienen 36a geschoben, ohne daß die Leitungen 31 gelöst werden. Danach wird die Gleitplatte 34 mit beiden Formkörpern 32, 27 nach oben geschoben, so daß der Formkörper 32 neben der Formplatte 15' zu liegen kommt und der Formkörper 27 die gestrichelt eingezeichnete Lage einnimmt. Sodann wird der Formkörper 32, der über die Versorgungsleitungen 33 an die Maschine angeschlossen ist, in die Horizontal-Gleitvorrichtung 38 der Formplatte 15' geschoben und befindet sich damit in Arbeitsposition.

Diese Bauweise bietet den Vorteil, daß keine Versorgungsleitungen gelöst oder abgeklemmt zu werden brauchen und daß der Wechsel der Formkörper und damit der Matrizen sehr schnell vorgenommen werden kann.

## Patentansprüche

1. Spritzgieß- oder Spritzprägemaschine zur Herstellung scheibenförmiger Informationsträger, z.B. CD's, mit einer in Schließrichtung (21) beweglichen Formplatte (15') zur Halterung eines ersten Formkörpers (27), der mindestens eine Matrize (20) aufnimmt und über bewegliche Versorgungsleitungen (31) mit der Maschine verbunden ist, dadurch gekennzeichnet,
a) daß die Formplatte (15') eine quer zur Schließrichtung (21) verlaufende Horizontal-Gleitvorrichtung (38) für den Formkörper (27) aufweist,
b) daß neben der Maschine eine ortsfest angeordnete Wechselvorrichtung (30) angeordnet ist, die eine erste, senkrecht verschiebbare Horizontal-Gleitvorrichtung (36) zur Aufnahme des in der Maschine befindlichen Formkörpers (27) und mindestens eine weitere, senkrecht verschiebbare Horizontal-Gleitvorrichtung (37) für einen weiteren Formkörper (32) aufweist, der mindestens eine Matrize (20) aufnimmt und über eigene Versorgungsleitungen (33) mit der Maschine verbunden ist, und
c) daß die Wechselvorrichtung (30) so angeordnet ist, daß beide Formkörper (27, 32) ohne Lösen der Versorgungsleitungen (31, 33) durch Verschieben ihre Plätze wechseln können.

2. Maschine nach Anspruch 1, dadurch gekennzeichnet, daß die Horizontal-Gleitvorrichtungen (36, 37, 38) mit paarweise verlaufenden Horizontal-Gleitschienen (36a, 37a, 38a) und die Formkörper (27, 32) mit entsprechend angeordneten Gleitstücken (27a, 32a) versehen sind.

3. Maschine nach Anspruch 1 oder 2, dadurch gekennzeichnet, daß die Horizontal-Gleitschienen (36a, 37a) der Wechselvorrichtung (30) durch eine Gleitplatte (34) miteinander gekoppelt sind und daß die Gleitplatte (34) senkrecht verschiebbar auf einem mit Gleitschienen (30b) versehenen Rahmen (30a) der Wechselvorrichtung (30) angeordnet ist.

4. Maschine nach einem der Ansprüche 1 bis 3, gekennzeichnet durch eine automatische, z.B. hydraulisch, pneumatisch oder elektrisch betätigte Wechselvorrichtung (30) für die mit den Matrizen versehenen Formkörper (27, 32).

5. Maschine nach einem der Ansprüche 1 bis 4, dadurch gekennzeichnet, daß die Formkörper (27, 32) mindestens ein Formteil (18b, 19b) zur Halterung mindestens einer Matrize (20) aufweisen.

6. Verfahren zur Herstellung scheibenförmiger Informationsträger mittels eines Spritzgieß- oder Spritzprägeverfahrens auf einer Maschine nach einem der Ansprüche 1 bis 5, dadurch gekennzeichnet,
a) daß ein erster Formkörper (27) mit mindestens einer Matrize (20) bestückt, in die Maschine eingebracht und über seine Versorgungsleitungen (31) mit der Maschine verbunden wird,
b) daß ein zweiter identisch aufgebauter Formkörper (32) in eine der Horizontal-Gleitvorrichtungen (37) der Wechselvorrichtung (30) eingebracht, mit mindestens einer Matrize (20) versehen und über eigene Versorgungsleitungen (33) an die Maschine angeschlossen wird und
c) daß zum Matrizenwechsel die Maschine kurzzeitig gestoppt und der erste Formkörper (27) durch Verschieben gegen den zweiten Formkörper (32) ausgetauscht wird, ohne daß die jeweiligen Versorgungsleitungen (31, 33) gelöst werden.

7. Verfahren nach Anspruch 6, dadurch gekennzeichnet,
a) daß nach dem Stoppen der Maschine der erste Formkörper (27) von der Formplatte (15') in die leere Horizontal-Gleitvorrichtung (36) der Wechselvorrichtung (30) geschoben,
b) daß die Gleitplatte (34) mit dem eingeschobenen ersten Formkörper (27) und dem zweiten vorbereiteten Formkörper (32) nach oben geschoben wird, so daß der zweite Formkörper (32) neben der Formplatte (15') mit der Horizontal-Gleitvorrichtung (38) zu liegen kommt, und
c) daß der zweite Formkörper (32) durch Horizontalverschiebung in die Horizontal-Gleitvorrichtung (38) der Formplatte (15') eingebracht wird.
